# EUROPÄISCHE PATENTANMELDUNG

(11) **EP 2 570 390 A1**
(43) Veröffentlichungstag der Anmeldung: **20.03.2013**
(21) Anmeldenummer: 12003424.4
(22) Anmeldetag: 04.05.2012
(51) Int. Cl.: C02F 3/22, C02F 3/12

(54) **Verschiebbare Verrohrung zum Einsatz in Behältern von Abwasseranlagen**

(30) Priorität: 13.09.2011 DE 202011105643 U
(71) Anmelder: KLARO GmbH, 95447 Bayreuth (DE)
(72) Erfinder: Schütz, Waldemar, 95445 Bayreuth (DE)
(74) Vertreter: Spranger, Stephan

(57) **Zusammenfassung**

Die Erfindung betrifft eine Verrohrung zum Einsatz in Behältern von Abwasseranlagen, mit zumindest einem oberen Bereich (1) und zumindest einem unteren Bereich (2), wobei der obere Bereich (1) und der untere Bereich (2) der Verrohrung in Fluidverbindung stehen, wobei der obere Bereich (1) gegen den unteren Bereich (2) unter Beibehaltung der Fluidverbindung teleskopartig verschiebbar ist, und wobei ein Abschnitt (2a, 3a) der Verrohrung in einen entsprechenden Abschnitt (1a, 2a) der Verrohrung mit einer veränderbaren Länge eines Überlappungsbereichs (5) eintaucht.

## Beschreibung

Die Erfindung betrifft eine Verrohrung zum Einsatz in Behältern von Abwasseranlagen, mit zumindest einem oberen Bereich und zumindest einem unteren Bereich, wobei der obere Bereich und der untere Bereich der Verrohrung in Fluidverbindung stehen, gemäß dem Oberbegriff des Anspruchs 1, wie beispielsweise Druckluftheber oder Membranbelüfter (Tellerbelüfter oder Rohrbelüfter), die zur Reinigung von Abwasser in Abwasserbehandlungsanlagen eingesetzt werden, insbesondere in Kleinkläranlagen und kleinen Kläranlagen.

Druckluftheber werden beispielsweise zum Fördern von Wasser, Abwasser und sonstigen feststoffbeladenen Suspensionen eingesetzt. Mit Hilfe eines Verdichters/ Gebläses wird Druckluft in den Heber eingeblasen, sodass das zu befördernde Medium von einem Niveau auf ein höheres Niveau angehoben werden kann. Die hauptsächlichen Aufgaben der Druckluftheber in Anlagen zur Abwasserbehandlung sind die Beschickung von verschiedenen Kammern, der Abzug von überschüssigem Schlamm und der Klarwasserabzug aus der Anlage selbst.

Stand der Technik ist, dass zum Beispiel Druckluftheber entweder aus Rohren mit Klebemuffen oder Steckmuffen mit Gummidichtung zusammen gesetzt werden. Bei dieser Variante setzen sich die Druckluftheber aus verschiedenen Rohrsegmenten (Rohre, Bögen, Abzweige, Reduzierstücke, Muffen, Endstücke, etc.) zusammen, die definiert aufeinander geschoben und/oder verklebt werden. Hierbei müssen die einzelnen Rohrsegmente in ihrer Länge auf das erforderliche Behältermaß - in der Regel in einer Vormontage - zugeschnitten werden. Damit ist die Vormontage der Druckluftheber äußerst zeitintensiv und unpraktikabel. Zum einen haben die fertigen Druckluftheber feste Abmessungen und besitzen keine bzw. nur eine sehr eingeschränkte Variabilität. Ist eine Änderung am Druckluftheber erforderlich, müssen die einzelnen Rohrsegmente wieder auseinander gebaut und ausgetauscht werden. Bei Rohren mit Klebemuffe muss wiederum der gesamte Heber zersägt und neu fixiert werden. Diese Druckluftheber können sowohl in Neuanlagen eingesetzt als auch in bestehende Altanlagen nachgerüstet werden.

Bei einer anderen bekannten Variante werden z.B. Druckluftheber aus einem Stück unter Einsatz von industriellen Maschinen gefertigt (z.B. die Kunststoff-Bearbeitungsverfahren für Hohlkörper). Diese Druckluftheber haben somit den Vorteil, dass sie nicht mehr zugeschnitten werden müssen. Aufgrund dessen erfolgt die Fertigung relativ schnell und einfach. Ein Nachteil dieser Variante ist, dass diese Druckluftheber bereits vordefinierte Abmessungen haben. Ihr Einsatz ist demnach nur auf bestimmte Behälter eingeschränkt. Die Variabilität ist somit stark eingeschränkt. Nachträgliche Änderungen am Druckluftheber können ebenfalls nicht mehr erfolgen. Nachrüstungen von unterschiedlichen Altanlagen sind nicht mehr möglich.

Der Erfindung liegt erstmals der Gedanke zu Grunde, die unpraktikablen Nachteile der bisher eingesetzten Verrohrungen zu eliminieren und die Vorteile der beiden geschilderten Varianten zu nutzen.

Der Erfindung liegt demnach die Aufgabe zugrunde, maschinell fertigbare Verrohrungen, z.B. Druckluftheber, vorzusehen, welche auf konstruktiv einfache und somit kostengünstige Weise einerseits variabel eingesetzt werden können, und anderseits nachträgliche Verstellungen ermöglichen.

Die Aufgabe wird erfindungsgemäß mit einer Verrohrung mit den Merkmalen gemäß Anspruch 1 gelöst. Bevorzugte Ausführungsformen davon sind in den abhängigen Unteransprüchen definiert.

Bei gleichbleibender Funktionalität - Beförderung von flüssigen Medien mittels Druckluft - wird die Aufgabe von der Erfindung auf besonders einfache Weise gelöst.

Die erfindungsgemäße Verrohrung zum Einsatz in Behältern von Abwasseranlagen, insbesondere beispielsweise in Kläranlagen oder Kleinkläranlagen, weist zumindest einen oberen Bereich der Verrohrung und zumindest einen unteren Bereich der Verrohrung auf, wobei der obere Bereich und der untere Bereich der Verrohrung in Fluidverbindung stehen. Der Begriff "oberer Bereich" bezieht sich dabei im Wesentlichen auf die Einbausituation in einem Behälter von Abwasseranlagen, wobei der obere Bereich insbesondere auch über dem oberen Behälterrand hervortretend eingebaut sein kann, wohingegen der Begriff "unterer Bereich" den Bereich der Verrohrung meint, welcher im Behälter und somit insbesondere unter dem Füllniveau des Behälters angeordnet sein kann. Erfindungsgemäß ist der obere Bereich gegen den unteren Bereich der Verrohrung unter Beibehaltung der Fluidverbindung teleskopartig verschiebbar, d. h. dabei taucht ein Abschnitt der Verrohrung, bevorzugt ein Abschnitt des oberen Bereichs der Verrohrung, in einen entsprechenden Abschnitt der Verrohrung, bevorzugt in einen entsprechenden Abschnitt des unteren Bereichs der Verrohrung, mit einer veränderbaren Länge eines entsprechenden Überlappungsbereichs ein. Somit kann durch Einstellen der veränderbaren Länge des Überlappungsbereichs erfindungsgemäß die Gesamtausdehnung der Verrohrung bzw. der Abstand zwischen dem oberen Bereich der Verrohrung und dem unteren Bereich der Verrohrung erfindungsgemäß besonders einfach eingestellt werden. Insbesondere kann die Einstellung vor Ort in Anpassung an die Gegebenheiten einer unter Umständen bereits bestehenden Abwasseranlage besonders einfach vorgenommen werden.

Will man Standardteile für eine Verrohrung des oberen Bereichs und eine Verrohrung des unteren Bereichs besonders effektiv miteinander verbinden, so besteht gemäß einer bevorzugten Ausführungsform der Erfindung die Möglichkeit, dass zwischen dem oberen Bereich und dem unteren Bereich eine Zwischenverrohrung vorgesehen ist, wobei diese Zwischenverrohrung die Fluidverbindung, welche zwischen dem oberen Bereich und dem unteren Bereich der Verrohrung nötig ist, herstellt. Dabei kann gegenüber dieser Zwischenverrohrung der obere Bereich der Verrohrung und/oder der untere Bereich der Verrohrung entsprechend teleskopartig verschiebbar sein, wobei ein jeweiliger Abschnitt der Zwischenverrohrung in einen entsprechenden Abschnitt der Verrohrung oder ein entsprechender Abschnitt der Verrohrung in einen jeweiligen Abschnitt der Zwischenverrohrung mit einer veränderbaren Länge eines Überlappungsbereichs eintauchen kann.

Besonders leicht und zuverlässig einstellbar kann die Länge des Überlappungsbereichs gemäß einer bevorzugten Ausführungsform der erfindungsgemäßen Verrohrung dann ausgebildet sein, wenn im Überlappungsbereich jeweils Gewinde vorgesehen sind, mittels welchen sich die jeweiligen Abschnitte gegeneinander durch Schraubbewegung zueinander bewegen lassen. Somit ist zum einen eine Einstellung der Verrohrung in Drehrichtung zueinander möglich, insbesondere eine Einstellung der Ausrichtung des oberen Bereichs der Verrohrung zum unteren Bereich der Verrohrung, und durch Einstellen der Einschraubtiefe kann die teleskopartige Verschiebung der einstellbaren Länge des Überlappungsbereichs somit besonders einfach und genau vorgenommen werden. Insbesondere ist auch eine reproduzierbare Einstellbarkeit, beispielsweise durch Angabe einer bestimmten nötigen Gewindeanzahl beim Eindrehen der jeweiligen Abschnitte zueinander erfindungsgemäß bevorzugt so einfach möglich.

Um den sicheren Betrieb einer Abwasseranlage mit der erfindungsgemäßen Verrohrung sicherzustellen und um zu vermeiden, dass es im Betrieb und den dabei auftretenden Fluiddrücken zum Auseinanderfallen der Verrohrung kommen kann oder zu einer Längsverschiebung der Verrohrung kommen kann, kann gemäß einer bevorzugten Ausführungsform der Erfindung eine Verschraubung zumindest im Überlappungsbereich der entsprechenden Abschnitte vorgesehen sein, wobei mittels der dort vorgesehenen Verschraubung diese Abschnitte gegen Bewegung zueinander gesichert ist. Die Verschraubung kann dabei insbesondere durch die Wandungen der jeweiligen Rohrelemente, welche gegeneinander teleskopartig verschiebbar sind, auf einfache Weise vorgenommen werden.

Die Verrohrung kann bevorzugt eine Hebervorrichtung, insbesondere eine Drucklufthebervorrichtung sein. Die Verrohrung kann aber auch beispielsweise ein Membranbelüfter (Tellerbelüfter oder Rohrbelüfter) sein.

Die erfindungsgemäße Vorrichtung wird nachfolgend anhand der beispielhaft in den Figuren gezeigten Ausführungsformen näher erläutert werden. Es zeigen:
- Fig. 1: eine schematische Darstellung einer erfindungsgemäßen Verrohrung einer Abwasseranlage, wobei es sich dabei um einen Druckluftheber mit den Merkmalen der erfindungsgemäßen Vorrichtung handelt, gemäß einer Ausführungsform der Erfindung;
- Fig. 2: eine schematische Darstellung einer erfindungsgemäßen Verrohrung einer Abwasseranlage, wobei es sich dabei um einen Druckluftheber mit den Merkmalen der erfindungsgemäßen Vorrichtung handelt, gemäß einer weiteren Ausführungsform der Erfindung; und
- Fig. 3: eine Detailansicht des Überlappungsbereichs der erfindungsgemäßen Verrohrung.

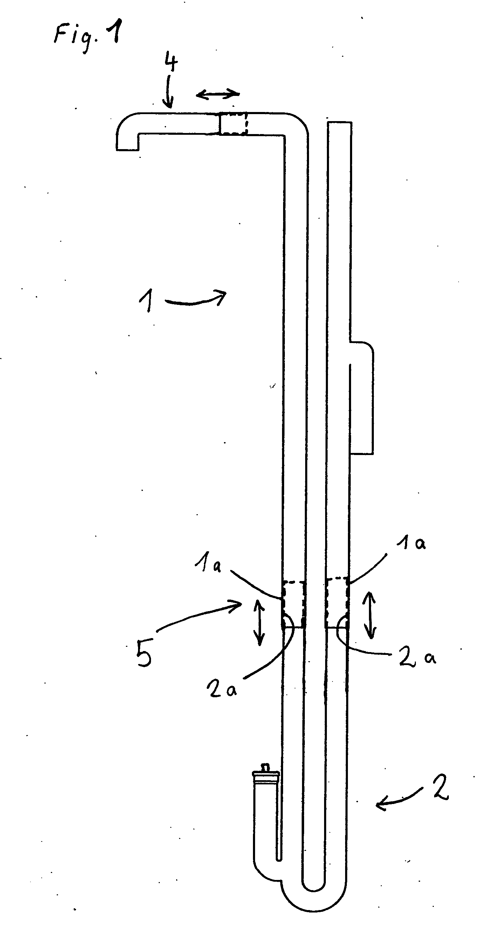

Die Fig. 1 zeigt schematisch eine Verrohrung einer Abwasseranlage gemäß einer bevorzugten Ausführungsform der Erfindung, wobei es sich dabei um einen Druckluftheber von an sich bekannter Bauart handelt. Die Darstellung der Fig. 1 ist allerdings nicht beschränkend hinsichtlich des Drucklufthebers zu verstehen, sondern der Fachmann kann das entsprechende Prinzip beispielsweise auch auf einen Membranbelüfter (Tellerbelüfter oder Rohrbelüfter) zum Einsatz in einer Abwasseranlage ohne Weiteres übertragen.

Die in Fig. 1 gezeigte erfindungsgemäße Verrohrung zeigt einen Druckluftheber mit einem oberen Bereich 1 sowie einem unteren Bereich 2, wobei der untere Bereich zum oberen Bereich über die in vertikaler Richtung angeordneten Rohrstücke zueinander jeweils in Fluidverbindung stehen. Der obere Bereich ist dabei gegen den unteren Bereich der Verrohrung unter Beibehaltung der Fluidverbindung teleskopartig verschiebbar, wie dies durch den Doppelpfeil in Fig. 1 dargestellt ist. Dabei taucht ein Abschnitt 1a der Verrohrung des oberen Bereichs in einen entsprechenden Abschnitt 2a des unteren Bereichs der Verrohrung mit einer veränderbaren Länge (in Fig. 1 dargestellt durch die gestrichelt dargestellten Bereiche und den Doppelpfeil) eines entsprechenden Überlappungsbereichs 5 ein. Die Querschnitte bzw. Durchmesser sind dabei erfindungsgemäß aufeinander abgestimmt, so dass die Innenabmessungen bzw. der Innendurchmesser der einen Verrohrung zumindest über die vorgesehene maximale Länge des Überlappungsbereichs 5 im Wesentlichen (insbesondere bevorzugt bis auf etwa 1 bis 5 mm) den entsprechenden Außenabmessungen bzw. dem entsprechenden Außendurchmesser der anderen, dort teleskopartig verschiebbaren Verrohrung entspricht. Wie in Fig. 1 zu sehen, ist auch eine vertikale erfindungsgemäße teleskopartige Verschiebung möglich (siehe z.B. Verschiebemöglichkeit von Element 4 zum Element der oberen Verrohrung 2).

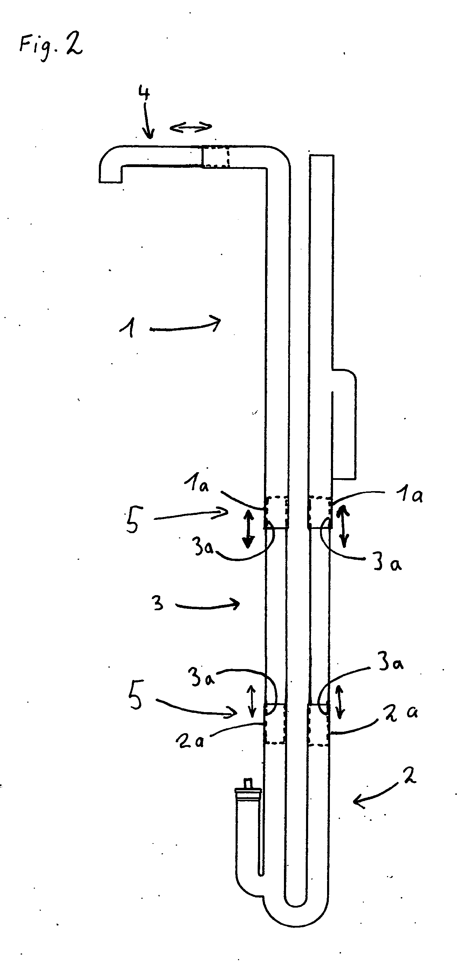

Die Fig. 2 zeigt eine schematische Darstellung einer erfindungsgemäßen Verrohrung einer Abwasseranlage, wobei es sich dabei um einen Druckluftheber mit den Merkmalen der erfindungsgemäßen Vorrichtung handelt, gemäß einer weiteren Ausführungsform der Erfindung. Im Unterschied zur Darstellung der Fig. 1 ist in Fig. 2 zwischen dem oberen Bereich 1 und dem unteren Bereich 2 der Verrohrung eine Zwischenverrohrung 3 vorgesehen, gegenüber welcher jeweils der obere Bereich 1 der Verrohrung und/oder der untere Bereich 2 der Verrohrung teleskopartig entsprechend verschiebbar sein kann.

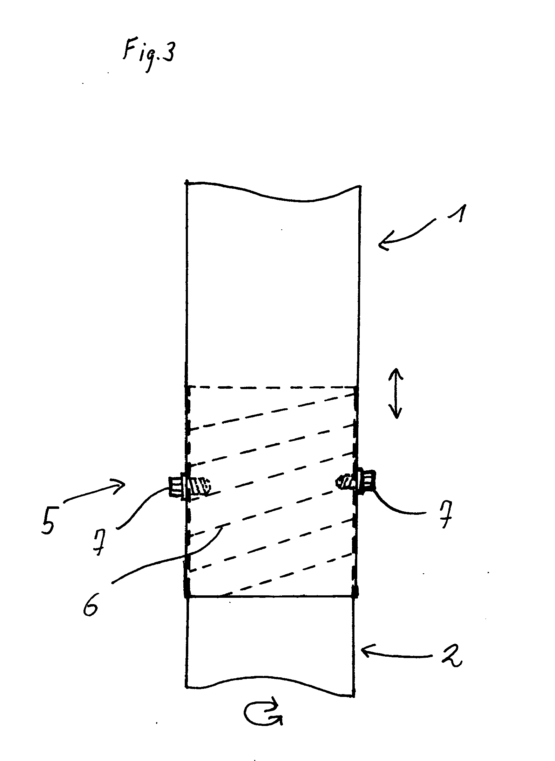

Die Fig. 3 zeigt vergrößert den Teil des Überlappungsbereichs 5 der in Fig. 1 oder Fig. 2 gezeigten Verrohrung, wobei in Fig. 3 zu sehen ist, dass die jeweiligen Abschnitte der Verrohrung ein Gewinde 6 aufweisen können, welches im jeweiligen Überlappungsbereich 5 vorgesehen ist. Auch ist in Fig. 3 die zumindest im Überlappungsbereich 5 vorgesehene zusätzliche Verschraubung 7 der Rohrelemente der jeweiligen Abschnitte zu erkennen. Dabei ist gemäß der Darstellung der Fig. 3 die Verschraubung 7 so vorgesehen, dass diese durch die jeweiligen Wandungen der beiden Abschnitte im Überlappungsbereich 5 der Verrohrung dort vorgesehen ist.

Es ist anzumerken, dass die jeweiligen Abschnitte der Verrohrung teleskopartig so gegeneinander verschiebbar sind, dass die Abschnitte jeweils passgenau ineinander laufend vorgesehen sein, insbesondere mit entsprechend angepassten Innen-zu-Außendurchmessem, so dass eine dichte Fluidverbindung dadurch sichergestellt werden kann. Insbesondere ist bevorzugt, dass die jeweiligen beiden teleskopartig gegeneinander verschiebbaren Bereiche der Verrohrung im Bereich der Abschnitte des Überlappungsbereichs so ineinander laufend hinsichtlich des jeweiligen Querschnitts und Durchmessers aufeinander agestimmt zusammenpassen, dass dort eine im Wesentlichen Presspassung vorliegen kann, ohne dass weitere Abdichtungsmaßnahmen, beispielsweise durch O-Ringe zwischen den jeweiligen Abschnitten nötig sind.

Wie erwähnt, sind die einzelnen ungemufften Rohrkomponenten der in den Figuren dargestellten erfindungsgemäßen Verrohrung so ausgestaltet, dass sie ineinander geschoben werden können und zusammen, z.B. wie dargestellt, einen vollständigen, vollfunktionsfähigen Druckluftheber ergeben. Mit diesen Komponenten (kurzes L-Rohr, langes L-Rohr, Steigrohr mit Zulauf, unteres U-Rohr mit Druckluftzuleitung, unteres Zulaufrohr mit Druckluftzuleitung(in den Figuren nicht dargestellt)) lassen sich prinzipiell alle Arten von Drucklufthebem, die in der Abwasserbehandlung zum Einsatz kommen, realisieren. Durch unterschiedliche Rohrquerschnitte passen die maschinell fertigbaren Komponenten genau aufeinander. Da die Komponenten ungemufft hergestellt sind, ist die Länge frei einstellbar. Die beispielsweise so realisierbaren Druckluftheber sind demnach teleskopierbar. Über Schrauben kann die Konstruktion fixiert und auf das gewünschte Maß eingestellt werden. Somit können die so teleskopierbaren Druckluftheber sowohl in Neuanlagen eingesetzt als auch in Altanlagen nachgerüstet werden. Müssen nachträglich Änderungen vorgenommen werden, können die Fixierungen mittels Schrauben wieder entfernt und die Rohre der erfindungsgemäßen Verrohrung auf die gewünschte Länge eingestellt werden.

## Patentansprüche

1. Verrohrung zum Einsatz in Behältern von Abwasseranlagen, mit zumindest einem oberen Bereich (1) und zumindest einem unteren Bereich (2), wobei der obere Bereich (1) und der untere Bereich (2) der Verrohrung in Fluidverbindung stehen,
**dadurch gekennzeichnet, dass**
der obere Bereich (1) gegen den unteren Bereich (2) unter Beibehaltung der Fluidverbindung teleskopartig verschiebbar ist, wobei ein Abschnitt (2a, 3a) der Verrohrung in einen entsprechenden Abschnitt (1a, 2a) der Verrohrung mit einer veränderbaren Länge eines Überlappungsbereichs (5) eintaucht.

2. Verrohrung nach Anspruch 1, **dadurch gekennzeichnet, dass** zwischen dem oberen Bereich (1) und dem unteren Bereich (2) der Verrohrung eine Zwischenverrohrung (3) vorgesehen ist, gegenüber welcher der obere Bereich (1) der Verrohrung und/oder der unter Bereich (2) der Verrohrung teleskopartig verschiebbar ist, wobei ein jeweiliger Abschnitt (3a) der Zwischenverrohrung (3) in einen entsprechenden Abschnitt (1a, 2a) der Verrohrung oder ein entsprechender Abschnitt (1a, 2a) der Verrohrung in einen jeweiligen Abschnitt (3a) der Zwischenverrohrung (3) mit einer veränderbaren Länge eines Überlappungsbereichs (5) eintaucht.

3. Verrohrung nach Anspruch 1 oder 2, **dadurch gekennzeichnet, dass** im Überlappungsbereich (5) Gewinde (6) vorgesehen sind mittels welchen sich die jeweiligen Abschnitte gegeneinander bewegen lassen.

4. Verrohrung nach einem der Ansprüche 1 bis 3, **dadurch gekennzeichnet, dass** die Abschnitte zumindest im Überlappungsbereich (5) mittels zumindest einer dort vorgesehenen Verschraubung (7) gegen Bewegung zueinander gesichert sind.

5. Verrohrung nach einem der Ansprüche 1 bis 4, **dadurch gekennzeichnet, dass** die Verrohrung eine Herbervorrichtung, insbesondere eine Drucklufthebervorrichtung, ist.

6. Verrohrung nach einem der Ansprüche 1 bis 5, **dadurch gekennzeichnet, dass** die Verrohrung ein Membranbelüfter, insbesondere bevorzugt ein Tellerbelüfter oder Rohrbelüfter, ist.
